# EUROPEAN PATENT APPLICATION

(11) **EP 4 159 927 A1**
(43) Date of publication of application: **05.04.2023**
(21) Application number: 21812658.9
(22) Date of filing: 30.03.2021
(51) Int. Cl.: E02B 3/12, E02B 3/06

(54) **RADIAL TYPE WAVE DISSIPATING BLOCK AND INSTALLATION METHOD**

(30) Priority: 27.05.2020 KR 20200063404; 25.09.2020 KR 20200124430
(71) Applicant: Hwang, Yeon Ho, Gunpo-si, Gyeonggi-do 15866 (KR)
(72) Inventor: Hwang, Yeon Ho, Gunpo-si, Gyeonggi-do 15866 (KR)
(74) Representative: Cabinet Chaillot
(86) International application number: PCT/KR2021/003897
(87) International publication number: WO 2021/241872

(57) **Abstract**

The present invention relates to a radial type wave dissipating block and an installation method thereof. The radial type wave dissipating block includes leg portions (100) each having the long rod shape having the length that is greater than the maximum width of a cross-section thereof, wherein the cross-sectional shape of each leg portion (100) is a polygon, three leg portions (100) are provided, the three leg portions (100) meet one another at a central portion (200) to be integrated with one another, and the three leg portions are each divided into an upper shell portion (10) and a lower shell portion (20) on the basis of the central portion (200).

## Description

### [Technical Field]

The present invention relates to a wave dissipating block installed on a coast, breakwater or the like to dissipate wave energy and an installation method thereof.

### [Background Art]

A wave dissipating block refers to a deformed concrete block installed for the purpose of attenuating the wave force that invades a breakwater or shore structure and preventing the reflected wave, and functions to protect the structure by preventing the absorption and scattering of dam body riprap.

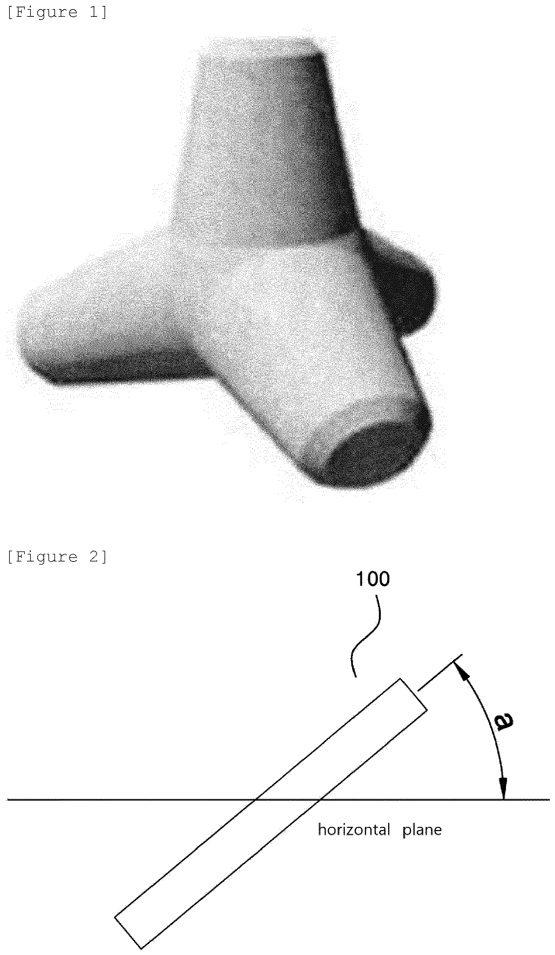

As a conventional wave dissipating block, tetrapods formed in the shape of four horns are the most mainly used (FIG. 1), and dimples modified from the tetrapods are also used a lot recently.

Tetrapods are coated in two layers on a slope of the breakwater or shore to form one structure, to distribute or dissipate wave energy by gap spaces between adjacent tetrapods and the pod shape itself of the tetrapod.

However, since the tetrapods have insufficiency interlocking, there have been countless cases in which the structure is partially or entirely destroyed due to damages and the like caused by scattering, collapse, and rocking caused by large wave heights such as typhoons.

In addition, as the conventional wave dissipating block, Dolos or Sealock series wave dissipating blocks are also widely used. However, due to the presence of a pillar portion of a central axis, interlocking may be disadvantageous during the uniform and random arrangement, and the leg portions facing the open sea may be lifted when the wave dissipating blocks are installed on the slope, thereby causing the overtopping wave.

### [Disclosure]

### [Technical Problem]

In order to improve the above-described problems in the related art and prevent damages to coasts and ports due to frequent invasions of high waves caused by climate change, an object of the present invention is to provide/the present invention provides a radial type wave dissipating block and an installation method thereof to have excellent stability and wave dissipation performance to cope with the high waves.

The present invention provides a radial type wave dissipating block and an installation method thereof to arrange a plurality of wave dissipating blocks to overlap each other, thereby implementing strong interlocking, so that all wave dissipating blocks are integrated.

The present invention provides a radial type wave dissipating block and an installation method thereof to have an omnidirectional radial structure for high porosity, excellent wave dissipating performance and overtopping wave-prevention performance.

The present invention provides a radial type wave dissipating block and an installation method thereof to secure a wide surface to increase a frictional force against a slope, thereby forming a more stable support structure.

The present invention provides a radial type wave dissipating block to facilitate various layers of stacking arrangement, thereby allowing selective use of appropriate arrangement suitable for each situation.

The present invention provides a wave dissipating block that is environmentally friendly and used as an artificial fishing bank in a closed space for serving as a spawning ground, shelter, and habitat for aquatic animals, plants and the like.

In addition, an object of the present invention is to provide a noble wave dissipating block in which a section of a leg portion has a polygonal shape with an edge other than a circular shape to increase the interlocking effect, and a strong binding force is provided by the radial Y-shaped leg portion to ensure stability and economic feasibility.

### [Technical Solution]

The present invention provides a radial type wave dissipating block including: leg portions (100) each having a long rod shape having a length greater than a maximum width of a section thereof, wherein three leg portions (100) are provided, the three leg portions (100) meet one another at a central portion (200) to be integrated with one another, and the three leg portions are divided into three upper leg portions (10) and three lower leg portions (20) with respect to the central portion (200), an angle between the upper leg portions (10) and an angle between the lower leg portions (20) include (120) degrees when viewed in a planar view, the three upper leg portions (10) are positioned between the three lower leg portions (20), respectively, when viewed in the planar view, an angle between one of the lower leg portions (20) and an adjacent upper leg portion (10) is 60 degrees when viewed in the plan view, an end of the upper leg portion (10) is provided with a first end face (11) formed horizontally; and a second end face (12) perpendicular to the first end face (11), an end of the lower leg portion (20) is provided with a first end face (21) formed horizontally; and a second end face (22) perpendicular to the first end face (21), so that the first end face (21) comes into contact with the ground when the three lower leg portions (20) are placed on the ground, and an outer surface of each leg portion (100) of the three leg portions (100) meets at the central portion (200), in which three outer surfaces meet at the central portion (200), a sectional shape from the central portion (30) of the leg portion (100) to the end face starting portion (40), at which the first end faces (11 and 21) and the second end faces (12 and 22) start, includes a square, and a sectional area gradually becomes smaller from the central portion (30) to the end face starting portion (40), in which an inclination angle (A) between a central axis of the leg portion (100) and an inclined outer surface from the central portion (30) to the end face starting portion (40) includes 1° ≤ A ≤ 15° , a length (C) of one side of a section in the end face starting portion (40) and a length (B) of one side of a section in the central portion (30) have a relationship of 0.4B ≤ C < B, and a length (L) between the end face starting portion (40) and the central portion (30) and a length (B) of one side of the section of the central portion (30) have a relationship of B ≤ L ≤ 3B.

An end chamfered face (13) is provided at a part in which the first end face (11) and the second end face (12) meet each other, and an end chamfered face (23) is provided at a part in which the first end face (21) and the second end face (22) meet each other.

A haunch portion (15) is provided at a place in which two upper leg portions (10) and one lower leg portion (20) meet each other, and a haunch portion (25) is provided at a place in which two lower leg portions (20) and one upper leg portion (10) meet each other.

The present invention provides an installation method of a radial type wave dissipating block in a method of installing a plurality of wave dissipating blocks, which includes: alternately installing a first row (310) installed to allow one upper leg portion (10) and two lower leg portions (20) to come into contact with the ground, and a second row (320) installed to allow two upper leg portions (10) and one lower leg portion (20) to come into contact with the ground, in which, in the first row (310), one lower leg portion (20), of any one wave dissipating block, which does not touch the ground is positioned between two upper leg portions (10), of an adjacent wave dissipating block, which do not touch the ground, one lower leg portion (20), of any one wave dissipating block, which touches the ground is positioned below one upper leg portion (10), of an adjacent wave dissipating block, which does not touch the ground, and in the second row (320), one upper leg portion (10), of any one wave dissipating block, which does not touch the ground is positioned between two lower leg portions (20), of an adjacent wave dissipating block, which do not touch the ground, and one upper leg portion (10), of any one wave dissipating block, which touches the ground is positioned below one lower leg portion (20), of an adjacent wave dissipating block, which does not touch the ground, in which the upper and lower leg portions of the wave dissipating blocks in the first row (310) and the upper and lower leg portions of the wave dissipating blocks in the second row (320) are installed to intersect each other.

The present invention provides an installation method of a radial type wave dissipating block in a method of installing a plurality of wave dissipating blocks, wherein two upper leg portions (10) and one lower leg portion (20) come into contact with the ground, in which one upper leg portion (10), of any one wave dissipating block, which does not touch the ground is positioned between two lower leg portions (20), of a neighboring wave dissipating block, which do not touch the ground, and one upper leg portion (10), of any one wave dissipating block, which touches the ground is positioned below one lower leg portion (20), of a neighboring wave dissipating block, which does not touch the ground.

The present invention provides an installation method of a radial type wave dissipating block in a method of installing a plurality of wave dissipating blocks, which further includes: alternately installing a first row (410) installed to allow two upper leg portions (10) and one lower leg portion (20) to come into contact with the ground, and a second row (420) installed to allow two upper leg portions (10) and one lower leg portion (20) to come into contact with the ground, wherein one upper leg portion (10), of the wave dissipating block in the first row (410), which does not touch the ground is positioned between the upper leg portions (10), of the wave dissipating block in the second row, which do not touch the ground, and one lower leg portion (20), of the wave dissipating block in the second row (420), which does not touch the ground is positioned between the lower leg portions (20), of the wave dissipating block in the first row, which do not touch the ground, and in the first row (410), one upper leg portion (10), of any one wave dissipating block, which does not touch the ground is positioned between two lower leg portions (20), of an adjacent wave dissipating block, which do not touch the ground, and in the second row (420), one lower leg portion (20), of any one wave dissipating block, which does not touch the ground is positioned between two upper leg portions (10), of an adjacent wave dissipating block, which do not touch the ground.

The present invention provides an installation method of a radial type wave dissipating block in a method of installing a plurality of wave dissipating blocks, wherein two upper leg portions (10) and one lower leg portion (20) come into contact with the ground, in which one upper leg portion (10), of any one wave dissipating block, which does not touch the ground is positioned between the two lower leg portions (20), of an adjacent wave dissipating block in the same row, which do not touch the ground, and between the lower leg portions (20), of a wave dissipating block in an adjacent row, which do not touch the ground.

### [Advantageous Effects]

The radial type wave dissipating block of the present invention has the advantageous effects as follows.

First, according to the radial type wave dissipating block of the present invention, the radially extending Y-shaped leg portions are arranged facing (overlapping)each other in the form of hugging each other, so that strong interlocking can be implemented, and the entire mounted wave dissipating blocks can be firmly integrated.

Second, the radial leg portions are provided in all directions, so that the high porosity and excellent wave dissipation performance can be obtained.

Third, the conventional pod-type wave dissipating block has an unstable support structure with weak interlocking and low friction because a section has a circular (cylindrical) shape, and a support type on the floor is configured as a point support. On the other hand, the radial type wave dissipating block of the present invention has a rectangular section and is formed with a wide ground surface at an end of a leg portion, so that interlocking can be improved by angled edges, a friction force can be increased, and a more stable support structure can be formed (supportable on three sides).

Fourth, the wave dissipating block of the present invention has radial leg portions extending in all directions, so that various layers of stacking arrangement can be facilitated, an appropriate arrangement suitable for a site situation or terrain can be selected, and the stability equivalent to a uniform arrangement can be obtained by the structure of the omnidirectional radial leg portions even with a randomly stacked arrangement.

Fifth, the wave dissipating block has the radial structure, so that high porosity and sufficient shielding spaces can be provided ecologically eco-friendly. The radial type wave dissipating block of the present invention does not provide simply empty spaces between the wave dissipating blocks, but can function as an artificial fishing bank in a closed space used as a spawning ground, shelter, and habitat for aquatic animals, plants and the like.

Sixth, the strong bonding force between wave dissipating blocks of the present invention may increase a damage coefficient (Kd), and this signifies that a wave dissipating block with a smaller weight may be used under the same wave conditions. Thus, the wave dissipating block of the present invention can have excellent economic feasibility. In addition, the economical section can also reduce the generation of Cr6+, which is harmful to the human body, so that the environmental performance can be improved.

Seventh, the domestically used existing wave dissipating blocks are arranged in two layers in principle, and the two-layered arrangement has somewhat excellent characteristic in the wave dissipation effect, but has a very disadvantageous characteristic in terms of economic feasibility. On the contrary the wave dissipating block of the present invention is a wave dissipating block having the omnidirectional radial structure in a one-layer arrangement, so that high porosity and excellent wave dissipation performance can be implemented, and excellent economic feasibility can be ensured based on the strong interlocking.

Eighth, the leg portions are configured to protrude unevenly and upwardly from the entire wave dissipating blocks when mounted, thereby implementing excellent anti-overflow performance, so that the wave run-up can be suppressed.

Ninth, the sectional thickness of the rectangular leg portion of the present invention may be sufficiently ensured, so that the sectional stress (such as shear stress and bending stress) due to the external force can be increased.

### [Description of Drawings]

FIG. 1 is a perspective view showing a conventional tetrapod.
FIG. 2 is a side view showing an angle between a leg portion of the present invention and a horizontal plane.
FIG. 3 is a perspective view showing a wave dissipating block according to the first embodiment of the present invention.
FIG. 4 is a side view showing the wave dissipating block according to the first embodiment of the present invention.
FIG. 5 is a plan view showing the wave dissipating block according to the first embodiment of the present invention.
FIG. 6 is a perspective view showing a wave dissipating block according to the second embodiment of the present invention.
FIG. 7 is a side view showing the wave dissipating block according to the second embodiment of the present invention.
FIG. 8 is a plan view showing the wave dissipating block according to the second embodiment of the present invention.
FIG. 9 is a perspective view showing a wave dissipating block according to the third embodiment of the present invention.
FIG. 10 is a side view showing the wave dissipating block according to the third embodiment of the present invention.
FIG. 11 is a plan view showing the wave dissipating block according to the third embodiment of the present invention.
FIG. 12 is a perspective view showing a wave dissipating block according to the fourth embodiment of the present invention.
FIG. 13 is a side view showing the wave dissipating block according to the fourth embodiment of the present invention.
FIG. 14 is a perspective of the wave dissipating block when viewed from above according to the fourth embodiment of the present invention.
FIG. 15 is a sectional view showing the leg portion according to the fifth embodiment of the present invention.
FIG. 16 is a sectional view separately showing only the leg portion according to the fifth embodiment of the present invention.
FIG. 17 is a perspective view showing the first mounting method of the present invention.
FIG. 18 is a plan view showing the first mounting method of the present invention.
FIG. 19 is a perspective view showing the second mounting method of the present invention.
FIG. 20 is a plan view showing the second mounting method of the present invention.
FIG. 21 is a perspective view showing the third mounting method of the present invention.
FIG. 22 is a plan view showing the third mounting method of the present invention.
FIG. 23 is a perspective view showing the fourth mounting method of the present invention.
FIG. 24 is a plan view showing the fourth mounting method of the present invention.

### [Best Mode]

### [Mode for Invention]

Hereinafter, embodiments of the present invention will be described in detail with reference to the accompanying drawings, so that a person having ordinary skill in the art may easily carry out the present invention. However, the invention may be embodied in various different forms and is not limited to the embodiments described herein. In addition, parts irrelevant to the description are omitted in the drawings to clearly describe the present invention, and like reference numerals designate like parts throughout the specification. Throughout the specification, when a part "includes" a certain element, the above expression does not exclude other elements, but may further include the other elements, unless particularly stated otherwise Hereinafter, the preferred embodiment of the present invention will be described in detail with reference to the accompanying drawings.

The present invention relates to a radial type wave dissipating block and an installation method thereof. The structure and shape of the radial type wave dissipating block will be described first, and the installation method will be described thereafter.

The radial type wave dissipating block of the present invention has a structure including three leg portions 100 each having a long rod shape with a length greater than the maximum width of a section (herein, the width or breadth may be a distance between sides of a polygon, and may be a distance between vertexes of a polygon), in which the three leg portions 100 meet one another at a central portion 200 so as to be integrated with one another, thereby forming one wave dissipating block.

FIG. 2 shows a side view of one leg portion 100 included in the radial type wave dissipating block of the present invention, in which the leg portion 100 is configured to define a predetermined angle a with the horizontal plane. Three leg portions forming the same angle a with respect to the horizontal plane are combined to form one wave dissipating block.

Each of the three leg portions 100 is divided into an upper leg portion 10 positioned at an upper part and a lower leg portion 20 positioned at a lower part with respect to the central portion 200.

The three upper leg portions extend at the same angle as each other upward from the central portion, and the three lower leg portions extend at the same angle as each other downward from the central portion, thereby having a structure in which the upper and lower leg portions extend radially with respect to the central portion.

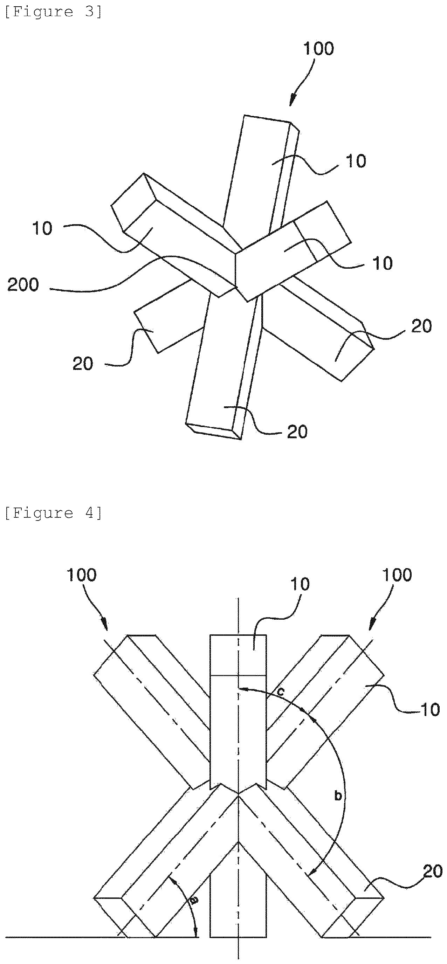

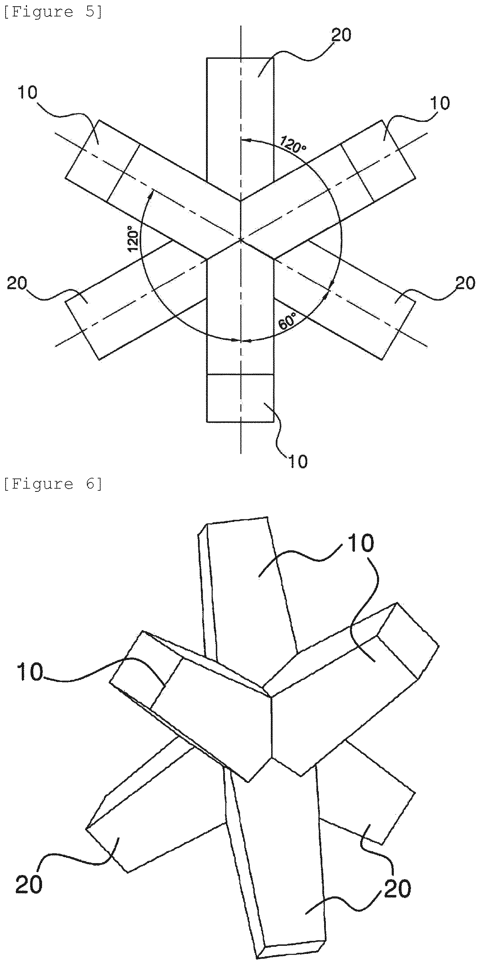

FIGS. 3 to 5 show the radial type wave dissipating block according to the first embodiment of the present invention. FIG. 3 shows a perspective view of the radial type wave dissipating block, FIG. 4 shows a side view of the radial type wave dissipating block, and FIG. 5 shows a plan view of the radial type wave dissipating block.

The radial type wave dissipating block of the first embodiment is configured to have a leg portion with a quadrangular section. The quadrangle may be a square, or may be a rectangle in some cases.

As shown in FIG. 4, the three leg portions are integral with each other while each defining an angle a with respect to the horizontal plane. In one wave dissipating block, the angle a between each center line of the three leg portions and the horizontal plane is the same, and the angle a between the center line of the leg portion and the horizontal plane may be 30 to 60 degrees.

As shown in FIG. 4, an angle b between a center line of the lower leg portion 20 of the present invention and a center line of an adjacent upper leg portion 10 forms an obtuse angle (greater than 90 degrees and less than 180 degrees), and an angle c between a center line of one upper leg portion 10 and a center line of another upper leg portion 10 forms an acute angle (less than 90 degrees). Likewise, an angle between a center line of one lower leg portion 20 and a center line of another lower leg portion 20 is also an acute angle.

The present invention since the upper leg portions extend at an acute angle to each other and the lower leg portions extend at an acute angle to each other as shown in the above manner, the blocks may have increased interlocking therebetween and strongly bound to each other when the upper and lower leg portions are arranged to be engaged with each other, so that various uniform and random arrangements may be facilitated, and more excellent stability (Kd) may be ensured.

In addition, as shown in the plan view of FIG. 5, an angle between a center line of one upper leg portion 10 and a center line of another upper leg portion 10 and an angle between a center line of one lower leg portion 20 and a center line of another lower leg portion 20 define 120 degrees in the plan view.

In addition, in the plan view of FIG. 5, the upper leg portion 10 is positioned at the same interval (60 degrees) between one lower leg portion 20 and another lower leg portion 20, and the lower leg portion 20 is positioned at the same interval (60 degrees) between one upper leg portion 10 and another upper leg portion 10, and
an outer surface of each leg portion 100 of the three leg portions 100 meets at the central portion 200, in which three outer surfaces other than three edges meet at the central portion 200 (see FIGS. 3, 6, 7, 9, and the like).

As shown in the drawings, according to the radial type wave dissipating block of the present invention, a shape formed by combining two upper leg portions with one lower leg portion or one upper leg portion with two lower leg portions at the central portion becomes a Y-shape, and the Y shapes are interlocked with each other when mounted, so that excellent wave dissipation performance may be implemented. In addition, according to the above technical features, the radial type wave dissipating block manufactured by the present invention will be named "Y-armour".

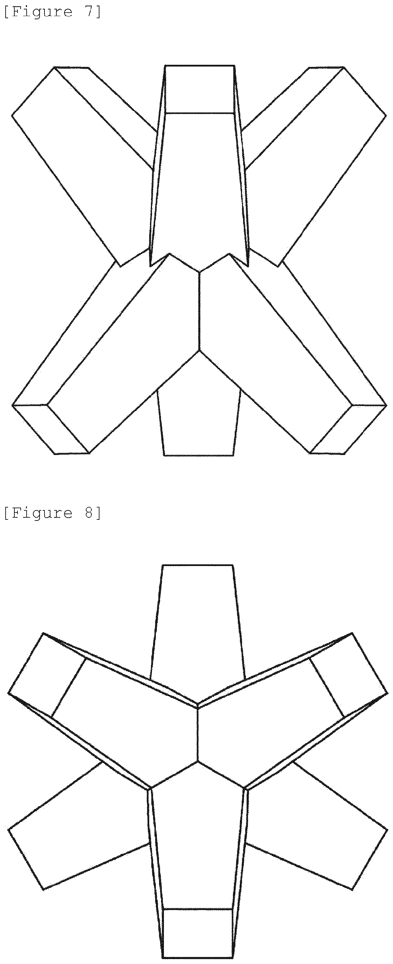

FIGS. 6 to 8 show the radial type wave dissipating block according to the second embodiment of the present invention. FIG. 6 shows a perspective view, FIG. 7 shows a side view, and FIG. 8 shows a plan view.

The radial type wave dissipating block of the second embodiment, based on the configuration of the radial type wave dissipating block of the first embodiment, is provided to have the same sectional shapes of the upper leg portion10 and the lower leg portion 20, and have the upper and lower leg portions with sectional areas gradually decreased to ends thereof from the central portion 200.

Due to the shapes of the upper and lower leg portions gradually smaller from the central portion to the ends, the leg portions may be engaged more firmly like a wedge when the lower leg portion is engaged between the upper leg portions and when the upper leg portion is engaged between the lower leg portions.

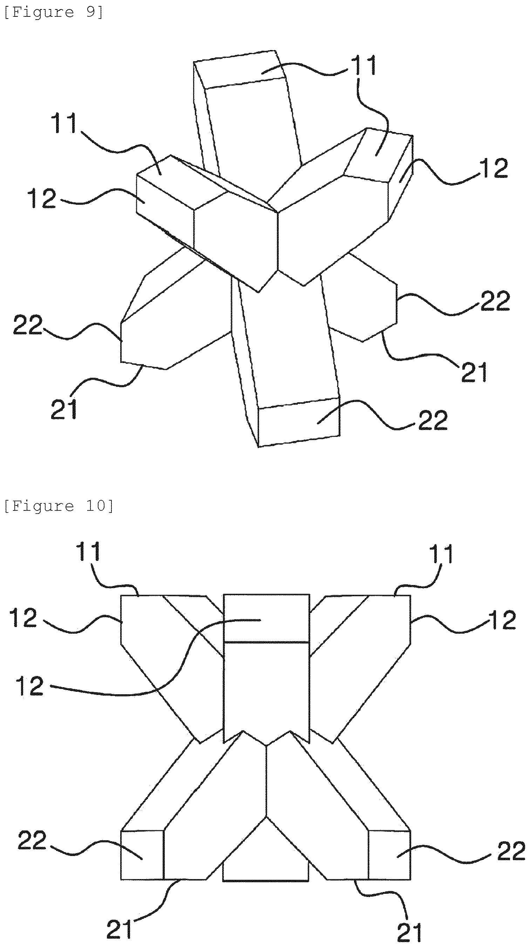

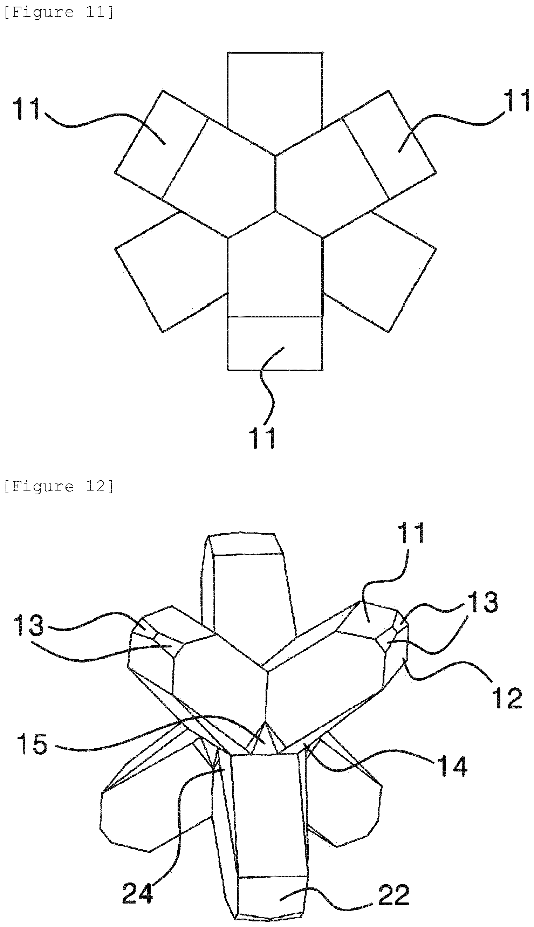

FIGS. 9 to 11 show the radial type wave dissipating block according to the third embodiment of the present invention. FIG. 9 shows a perspective view, FIG. 10 shows a side view, and FIG. 11 shows a plan view.

The radial type wave dissipating block of the third embodiment, based on the configuration of the radial type wave dissipating block of the first embodiment, is provided with a first end face 11 and a second end face 12 at the end of the upper leg portion 10, and a first end face 21 and a second end face 22 at the end of the lower leg portion 20.

The first end face 11 and the first end face 21 are formed parallel to the horizontal plane, and the second end face 12 and the second end face 22 are formed perpendicular to the first end face 11 and the first end face 21, respectively. In other words, the second end face 12 and the second end face 22 are formed in a vertical direction perpendicular to the horizontal plane.

As shown in FIG. 10, the radial type wave dissipating block of the third embodiment may be configured such that the first end face 21 in the lower part of the block may be placed in contact with the ground, so that a friction against the ground may be increased, and the stability of the wave dissipating block may be improved.

In addition, since the first end face 11 is provided in the horizontal direction at the end of the upper leg portion 10, the first end face 11 comes into contact with the ground when the wave dissipating block of the present invention is placed upside down.

Further, due to the first end face 11 and the first end face 21, the wave dissipating block can be easily manufactured. A formwork member corresponding to the first end face 21 comes into contact with the ground, so that the formwork can be stably installed. When a part corresponding to the first end face 11 is set as a concrete injection hole, concrete may be tightly filled inside the formwork, and when the last concrete is poured into the injection hole and finished horizontally, the first end face 11 may be formed by itself. Accordingly, the first end face 11 and the first end face 21 may exert a synergistic effect of allowing the radial type wave dissipating block of the present invention to be easily manufactured.

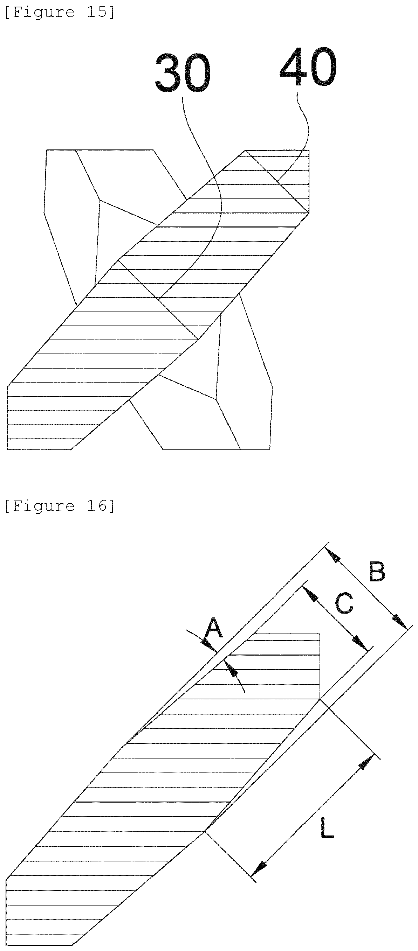

In addition, the radial type wave dissipating block of the present invention may be mounted in the form shown in FIGS. 15 to 22. Since the second end face 12 and/or the second end face 22 come into contact with the ground, the friction against the ground may be increased.

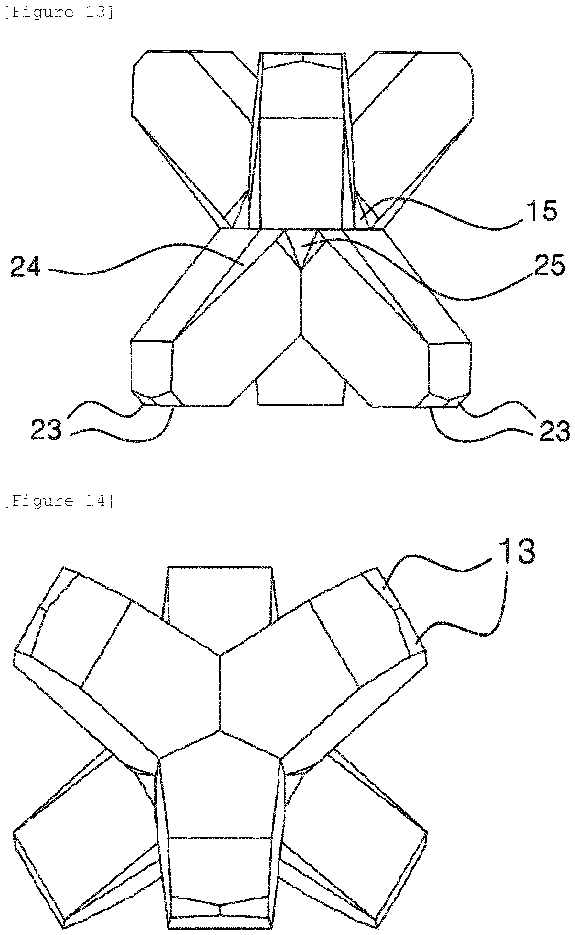

FIGS. 12 to 14 show the radial type wave dissipating block according to the fourth embodiment of the present invention. FIG. 12 shows a perspective view, FIG. 13 shows a side view, and FIG. 14 shows a perspective view seen from above.

The radial type wave dissipating block of the fourth embodiment, based on the configuration of the radial type wave dissipating block of the second embodiment, is provided with a first end face 11 and a second end face 12 at the end of the upper leg portion 10, and a first end face 21 and a second end face 22 at the end of the lower leg portion 20. In addition, an end chamfered face 13 is provided at a part in which the first end face 11 and the second end face 12 meet each other, an end chamfered face 23 is provided at a part in which the first end face 21 and the second end face 22 meet each other, a side chamfered face 14 is provided at an edge of the upper leg portion 10, a side chamfered face 24 is provided at an edge of the lower leg portion 20, a haunch portion 15 is provided at a place in which two upper leg portions 10 and one lower leg portion 20 meet each other, and a haunch portion 25 is provided at a place in which two lower leg portions 20 and one upper leg portion 10 meet each other.

The end chamfered faces 13 and 23 are provided to relieve stress concentration that may occur at the edge in which the first end faces 11 and 21 and the second end faces 12 and 22 meet each other, respectively, in which two faces having a certain angle may be formed as shown in FIGS. 12 to 14, one face may be formed, or three or more faces or curved faces may be formed.

The side chamfered faces are provided to relieve stress concentration that may occur at the edges of the upper and lower leg portions, in which the face may be gradually narrower toward the end as shown in FIGS. 12 and 13, or may be formed to have a face with a constant thickness.

In addition, when the upper and lower leg portions have quadrangular sections, the side chamfer face may be formed on all four edges, or may be formed only at two edges in which the upper and lower leg portions face each other as shown in FIG. 13.

The haunch portion defines a gentle face to relieve stress concentration of the part in which the upper and lower leg portions meet each other. The drawing shows the haunch portion formed in three planes, however, one plane, four or more planes or curved face may be formed.

FIGS. 15 and 16 show sectional views of a leg portion according to the fifth embodiment of the present invention.

In one leg portion 100, a sectional part positioned at a center in a longitudinal direction is called a central portion 30, sectional parts in which the first end faces 11 and 21 and the second end faces 12 and 22 start are called end face starting portions 40, and a sectional shape from the central portion 30 to the end face starting portion 40 is a square.

The leg portion 100 is formed to have a sectional area gradually smaller from the central portion 30 to the end face starting portion 40, and an inclination angle A between the central axis of the leg portion 100 and the inclined outer surface from the central portion 30 to the end face starting portion 40 is 1° ::;; A ≤ 15° .

In addition, a length C of one side of a square section in the end face starting portion 40 and a length B of one side of a square section in the central portion 30 have a relationship of 0.4B ≤ C < B, and a length L between the end face starting portion 40 and the central portion 30 and a length B of one side of the section of the central portion 30 have a relationship of B ≤ L ≤ 3B.

Further, a form in which the fourth embodiment is mixed with the fifth embodiment may also be embodied.

Hereinafter, the installation method using the radial type wave dissipating block of the present invention will be described.

The installation method of general wave dissipating blocks is divided into a uniform arrangement and a random arrangement. The random arrangement has poor aesthetics upon construction, porosity subject to the arrangement is unclear, it is difficult to calculate the exact number of wave dissipating blocks required for construction, and it is also disadvantageous in view of the economic feasibility. In general the uniform arrangement has higher stability (Kd) compared to the random arrangement. This is because the blocks may be uniformly stacked in a constant pattern so as to achieve the stable integration.

The radial type wave dissipating blocks of the present invention are arranged such that the radial leg portions forming the Y-shape are interlocked as if hugging each other, and accordingly, strong interlocking and integration may be implemented in the longitudinal and transverse directions.

In the present invention, first to fourth installation methods will be described with respect to the installation method of the radial type wave dissipating blocks.

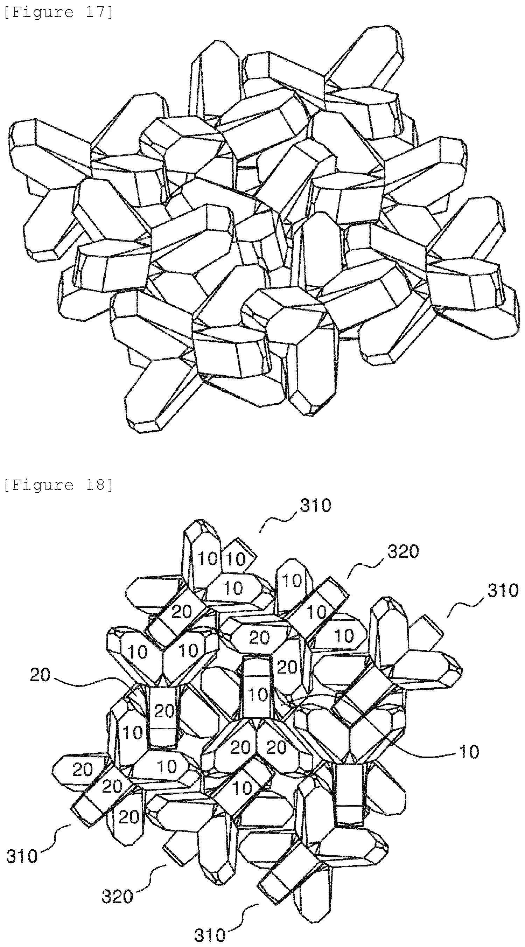

FIG. 17 shows a perspective view of the radial type wave dissipating blocks installed according to the first installation method, and FIG. 18 shows a perspective view of the radial type wave dissipating blocks installed according to the first installation method.

The first installation method refers to a method of alternately installing a first row 310 installed to allow one upper leg portion 10 and two lower leg portions 20 to come into contact with the ground, and a second row 320 installed to allow two upper leg portions 10 and one lower leg portion 20 to come into contact with the ground.

In the first row 310, one lower leg portion 20, of any one wave dissipating block, which does not touch the ground is positioned between two upper leg portions 10, of an adjacent wave dissipating block, which do not touch the ground, and one lower leg portion 20, of any one wave dissipating block, which touches the ground is positioned below one upper leg portion 10, of an adjacent wave dissipating block, which does not touch the ground, so that the Y-shaped wave dissipating blocks connected to each other in the first row 310 are connected to each other while being snapped.

In the second row 320, one upper leg portion 10, of any one wave dissipating block, which does not touch the ground is positioned between two lower leg portions 20, of an adjacent wave dissipating block, which do not touch the ground, and one upper leg portion 10, of any one wave dissipating block, which touches the ground is positioned below one lower leg portion 20, of an adjacent wave dissipating block, which does not touch the ground, so that the inversed Y-shaped wave dissipating blocks connected to each other in the second row 320 are connected to each other while being snapped.

In addition, the upper and lower leg portions of the wave dissipating blocks in the first row 310 and the upper and lower leg portions of the wave dissipating blocks in the second row 320 are installed to intersect each other at adjacent positions.

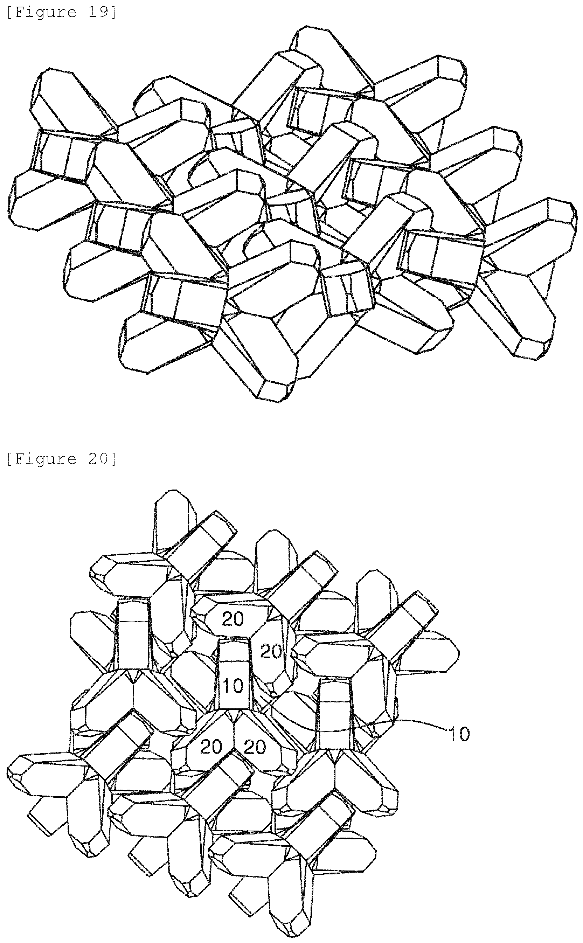

FIG. 19 shows a perspective view of the radial type wave dissipating blocks installed according to the second installation method, and FIG. 20 shows a perspective view of the radial type wave dissipating blocks installed according to the second installation method.

The second installation method refers to a method of installing all wave dissipating blocks so that the two upper leg portions10 and one lower leg portion 20 touch the ground.

The wave dissipating blocks are connected to each other while being snapped such that one upper leg portion 10, of any one wave dissipating block, which does not touch the ground is positioned between two lower leg portions 20, of a neighboring wave dissipating block, which do not touch the ground, and one upper leg portion 10, of any one wave dissipating block, which touches the ground is positioned below one lower leg portion 20, of a neighboring wave dissipating block, which does not touch the ground.

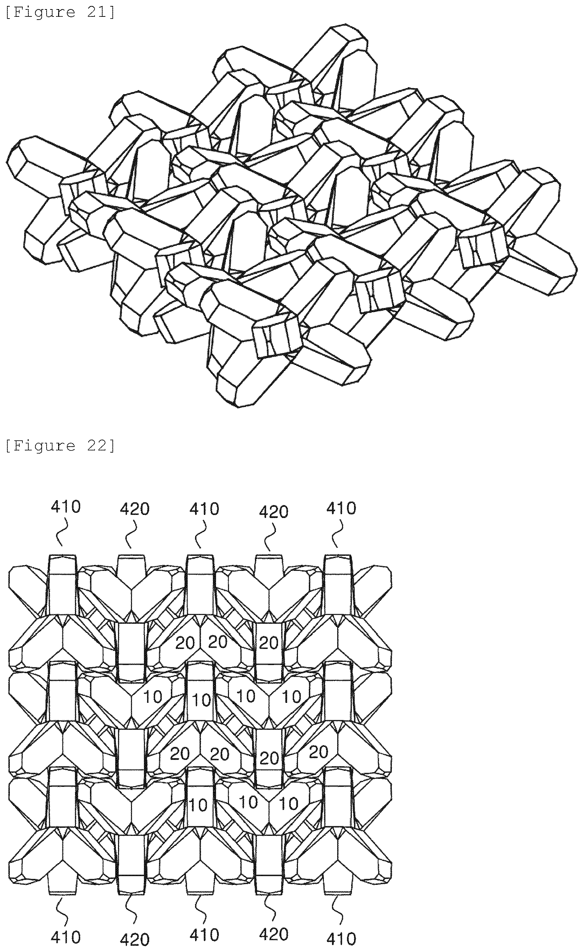

FIG. 21 shows a perspective view of the radial type wave dissipating blocks installed according to the third installation method, and FIG. 22 shows a perspective view of the radial type wave dissipating blocks installed according to the third installation method.

The third installation method refers to a method of alternately installing a first row 410 installed to allow two upper leg portions 10 and one lower leg portion 20 to come into contact with the ground, and a second row 420 installed to allow one upper leg portion 10 and two lower leg portions 20 to come into contact with the ground.

One upper leg portion 10, of the wave dissipating block in the first row 410, which does not touch the ground is positioned between the upper leg portions 10, of the wave dissipating block in the second row, which do not touch the ground, and one lower leg portion 20, of the wave dissipating block in the second row 420, which does not touch the ground is positioned between the lower leg portions 20, of the wave dissipating block in the first row, which do not touch the ground.

In the first row 410, inverted Y-shapes are connected in a straight line such that one upper leg portion 10, of any one wave dissipating block, which does not touch the ground is positioned between two lower leg portions 20, of an adjacent wave dissipating block, which do not touch the ground.

In the second row 420, Y-shapes are connected in a straight line such that one lower leg portion 20, of any one wave dissipating block, which does not touch the ground is positioned between two upper leg portions 10, of an adjacent wave dissipating block, which do not touch the ground.

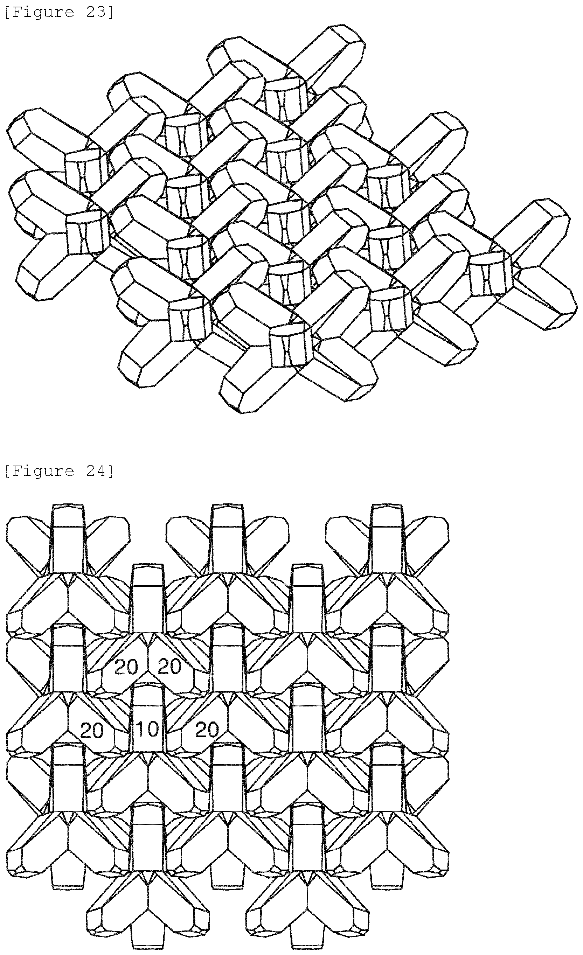

FIG. 23 shows a perspective view of the radial type wave dissipating blocks installed according to the fourth installation method, and FIG. 24 shows a perspective view of the radial type wave dissipating blocks installed according to the fourth installation method.

The fourth installation method refers to a method in which the two upper leg portions 10 and one lower leg portion 20 are installed to touch the ground.

It is configured such that one upper leg portion 10, of any one wave dissipating block, which does not touch the ground is positioned between the two lower leg portions 20, of an adjacent wave dissipating block in the same row, which do not touch the ground, and between the lower leg portions 20, of a wave dissipating block in an adjacent row, which do not touch the ground.

The radial type wave dissipating block of the present invention can maximize the integration by the uniform arrangement as in the above manner. Since the radial type wave dissipating block has the omnidirectional radial structure, in which the interlocking can be implemented on all sides (6 sides) even when the pattern of the above uniform arrangement collapses due to an unexpected natural disaster.

In other words, the radial type wave dissipating block of the present invention can exhibit stability, which is not significantly different from the uniform arrangement, even when the random arrangement is applied. Thus, even when the wave of an unexpected frequency of repetition invades and inevitably destroys the uniform arrangement pattern of the wave dissipating blocks, sufficient stability can be maintained even by the random arrangement.

In addition, the radial type wave dissipating blocks of the present invention can ensure the excellent binding force even in covering (random arrangement) on a forward slope of an upright wall.

In addition, the structure and shape of the radial type wave dissipating block of the present invention is not limited to the above-described first to fifth embodiments.

In other words, the first end face and the second end face may be formed at ends of tapered upper and lower leg portions (the configuration of combining the second embodiment with the third embodiment), the first end face, the second end face, the end chamfer face or the side chamfer face may be formed at the ends of the tapered upper and lower leg portions, or the end chamfered face and/or the side chamfered face and/or the haunch portion may be provided to the configuration of the third embodiment.

Further, Various embodiments, such as a shape without the end chamfer face only, a shape without the side chamfer face only, a shape without the haunch portion only, a shape without both of the end chamfer face and the side chamfer face, a shape without both of the end chamfer face and the haunch portion, and a shape without both of the side chamfer face and the haunch portion, may be applied to the configuration of the fourth embodiment.

Further, a shape of the leg portion with a hexagonal section may also be applicable in addition to the above various embodiments.

The present invention has been described with reference to the embodiments shown in the drawings, which are merely exemplary, and it will be understood by those skilled in the art that various deformations, modifications and other equivalent embodiments may be applicable based on the above-described embodiments.

Therefore, the actual scope of the present invention will be defined by the technical spirit of the appended claims.

**[Description of Drawings]**

| | |
|---|---|
| 100: Leg portion | 10: Upper leg portion |
| 20: Lower leg portion | 11: First end face |
| 12: Second end face | 13: End chamfer face |
| 14: Side chamfer face | 15: Haunch portion |
| 21: First end face | 22: Second end face |
| 23: End chamfer face | 24: Side chamfer face |
| 25: Haunch portion | 30: Central portion |
| 40: End face starting portion | 200: Central portion |
| 310, 410: First row | 320, 420: Second row |

| | |
|---|---|
| a: Angle between center line of leg portion and horizontal plane b: Angle between center line of upper leg portion and center line of adjacent lower leg portion c: Angle between center line of upper leg portion and center line of upper leg portion A: Inclination angle between inclined outer surface from central portion 30 to end face starting portion 40 and central axis of leg portion 100 B: Length of one side of section in central portion 30 C: Length of one side of section in end face starting portion 40 L: Length between end face starting portion 40 and central portion 30 | |

### [Industrial Applicability]

The present invention relates to a wave dissipating block installed on a coast, breakwater or the like to dissipate wave energy and an installation method thereof and may have the industrial applicability to prevent damages caused by waves.

## Claims

1. A radial type wave dissipating block comprising:
leg portions (100) each having a long rod shape having a length greater than a maximum width of a section thereof, wherein
the leg portions (100) include three leg portions, the three leg portions (100) meet one another at a central portion (200) to be integrated with one another, and the three leg portions are divided into three upper leg portions (10) and three lower leg portions (20) with respect to the central portion (200), in which an angle between the upper leg portions (10) and an angle between the lower leg portions (20) include (120) degrees when viewed in a planar view,
the three upper leg portions (10) are positioned between the three lower leg portions (20), respectively, when viewed in the planar view, and an angle between one of the lower leg portions (20) and an adjacent upper leg portion (10) is 60 degrees when viewed in the plan view, wherein
an end of the upper leg portion (10) is provided with a first end face (11) formed horizontally; and a second end face (12) perpendicular to the first end face (11), and an end of the lower leg portion (20) is provided with a first end face (21) formed horizontally; and a second end face (22) perpendicular to the first end face (21), so that the first end face (21) comes into contact with the ground, and an outer surface of each leg portion (100) of the three leg portions (100) meets at the central portion (200) when the three lower leg portions (20) are placed on the ground, so that three outer surfaces meet at the central portion (200), a sectional shape from the central portion (30) of the leg portion (100) to the end face starting portion (40), at which the first end faces (11 and 21) and the second end faces (12 and 22) start, includes a square, and a sectional area gradually becomes smaller from the central portion (30) to the end face starting portion (40), in which an inclination angle (A) between a central axis of the leg portion (100) and an inclined outer surface from the central portion (30) to the end face starting portion (40) includes 1° ≤ A ≤ 15° , a length (C) of one side of a section in the end face starting portion (40) and a length (B) of one side of a section in the central portion (30) have a relationship of 0.4B ≤ C < B, and a length (L) between the end face starting portion (40) and the central portion (30) and a length (B) of one side of the section of the central portion (30) have a relationship of B ≤ L ≤ 3B.

2. The radial type wave dissipating block of claim 1, wherein an end chamfered face (13) is provided at a part in which the first end face (11) and the second end face (12) meet each other, and an end chamfered face (23) is provided at a part in which the first end face (21) and the second end face (22) meet each other.

3. The radial type wave dissipating block of claim 2, wherein a haunch portion (15) is provided at a place in which two upper leg portions (10) and one lower leg portion (20) meet each other, and a haunch portion (25) is provided at a place in which two lower leg portions (20) and one upper leg portion (10) meet each other.

4. A method of installing a plurality of wave dissipating blocks of any one of claims 1 to 3, the method comprising:
alternately installing a first row (310) installed to allow one upper leg portion (10) and two lower leg portions (20) to come into contact with the ground, and a second row (320) installed to allow two upper leg portions (10) and one lower leg portion (20) so as to come into contact with the ground, wherein,
in the first row (310), one lower leg portion (20), of any one wave dissipating block, which does not touch the ground is positioned between two upper leg portions (10), of an adjacent wave dissipating block, which do not touch the ground, and one lower leg portion (20), of any one wave dissipating block, which touches the ground is positioned below one upper leg portion (10), of an adjacent wave dissipating block, which does not touch the ground, and
in the second row (320), one upper leg portion 10, of any one wave dissipating block, which does not touch the ground is positioned between two lower leg portions (20), of an adjacent wave dissipating block, which do not touch the ground, and one upper leg portion (10), of any one wave dissipating block, which touches the ground is positioned below one lower leg portion (20), of an adjacent wave dissipating block, which does not touch the ground, in which
the upper and lower leg portions of the wave dissipating blocks in the first row (310) and the upper and lower leg portions of the wave dissipating blocks in the second row (320) are installed to intersect each other.

5. A method of installing a plurality of wave dissipating blocks of any one of claims 1 to 3, the method comprising:
installing two upper leg portions (10) and one lower leg portion (20) to come into contact with the ground, wherein
one upper leg portion (10), of any one wave dissipating block, which does not touch the ground is positioned between two lower leg portions (20), of a neighboring wave dissipating block, which do not touch the ground, and one upper leg portion (10), of any one wave dissipating block, which touches the ground is positioned below one lower leg portion (20), of a neighboring wave dissipating block, which does not touch the ground.

6. A method of installing a plurality of wave dissipating blocks of any one of claims 1 to 3, the method comprising:
alternately installing a first row (410) installed to allow two upper leg portions (10) and one lower leg portion (20) to come into contact with the ground, and a second row (420) installed to allow two upper leg portions (10) and one lower leg portion (20) to come into contact with the ground, wherein
one upper leg portion (10), of the wave dissipating block in the first row (410), which does not touch the ground is positioned between the upper leg portions (10), of the wave dissipating block in the second row, which do not touch the ground, and one lower leg portion (20), of the wave dissipating block in the second row (420), which does not touch the ground is positioned between the lower leg portions (20), of the wave dissipating block in the first row, which do not touch the ground, in which,
in the first row (410), one upper leg portion (10), of any one wave dissipating block, which does not touch the ground is positioned between two lower leg portions (20), of an adjacent wave dissipating block, which do not touch the ground, and
in the second row (420), one lower leg portion (20), of any one wave dissipating block, which does not touch the ground is positioned between two upper leg portions (10), of an adjacent wave dissipating block, which do not touch the ground.

7. A method of installing a plurality of wave dissipating blocks of any one of claims 1 to 3, the method comprising:
installing two upper leg portions (10) and one lower leg portion (20) to come into contact with the ground, wherein
one upper leg portion (10), of any one wave dissipating block, which does not touch the ground is positioned between the two lower leg portions (20), of an adjacent wave dissipating block in the same row, which do not touch the ground, and between the lower leg portions (20), of a wave dissipating block in an adjacent row, which do not touch the ground.
